# EUROPEAN PATENT SPECIFICATION

(11) **EP 1 557 709 B1**
(45) Date of publication and mention of the grant of the patent: **04.07.2007**
(21) Application number: 04075146.3
(22) Date of filing: 23.01.2004
(51) Int. Cl.: G02B 26/04, G02B 7/00, H04N 9/31, B81B 5/00

(54) **Device and method for pixel generation, and apparatus and method for image projection**
Vorrichtung und Verfahren zur Pixelgenerierung, Vorrichtung und Verfahren zur Bildprojektion
Dispositif et méthode pour la génération de pixels, dispositif et méthode pour la projection d'images

(43) Date of publication of application: 27.07.2005
(73) Proprietor: SEIKO EPSON CORPORATION, Shinjuku-ku, Tokyo 163-0811 (JP)
(72) Inventor: Fernandez, José A., EPSON EUROPE ELECTRONICS GmbH, 08190 Sant Cugat del Vallès, Barcelona (ES)
(74) Representative: Davila Baz, Angel

(56) References cited:
- EP-A- 0 169 116
- EP-A- 0 651 273
- EP-A- 0 662 773
- US-A- 4 974 936
- US-A- 4 997 521
- US-A- 5 642 456
- US-A- 6 147 720
- US-A1- 2002 015 831
- US-A1- 2002 196 515

## Description

### FIELD OF THE INVENTION

The invention relates to light projection using electronically controlled pixel generating devices.

### STATE OF THE ART

One well-known method for image projection is based on the use of the so-called Digital Micromirror Device (DMD) chip, based on a technique disclosed in, for example, EP-B-0332953**.**

The DMD chip is an optical semiconductor, comprising a rectangular array of a large number (for example, more than one million) of hinged microscopic mirrors, each one of which corresponds to one pixel of the image and each one of which can be individually pivoted (by application of a corresponding control signal) between an "on" position (in which the mirror projects incoming light onto a screen or similar device) and an "off" position (in which the mirror does not project incoming light onto the screen). Images can thus be projected on the screen by projecting light onto the mirror surface of the DMD chip and applying appropriate control signals (based on a digital video or graphic signal) to the chip, thus co-ordinating the position ("on"/"off") of the respective mirrors and creating light and dark pixels on the screen or other projection surface. Grey-scales can be obtained by rapidly switching the mirror between its "on" and "off" positions, thousands of times per second. Depending on the ratio between the time when the mirror is in the "on" position and the time it is in the "off" position (and due to the "integration" of the received signals that takes place in the human visual system), lighter and darker "grey" pixels are obtained (that is, the pixels are perceived by the human observer as being more or less grey).

Different methods are known for projecting coloured images using the DMD technology and spectrum recombination.

According to one method, the white light that is projected onto the mirror surface of the DMD chip is first passed through a rotating colour wheel, comprising red, green and blue filter sectors or zones. Thus, the colour of the light that is reflected by the mirrors changes cyclically between red, green and blue, depending on the position of the colour wheel at each instant. Thus, by co-ordinating the "on"/"off" switching of the mirrors with the position of the colour wheel, coloured images (or, rather, images being perceived by the human observer as being coloured) can be projected. This technique is disclosed in, for example, EP-B-0662773 and is used in the so-called 1-chip DLP^{™} (DLP^{™}: Digital Light Processing) systems (a DLP^{™} system includes the DMD and related control electronics).

Another known method for obtaining coloured images is based on the use of 3 DMD chips, one for each colour. The incoming white light is split into a red, a green and a blue beam, each of said beams being directed onto the mirror surface of a corresponding DMD chip (that is, one chip receives the red light, another the green light and the third one the blue light), the mirrors of which are switched between their on and off states by the control signals. The light reflected by the mirrors in the "on" states of the three chips is then combined to form a coloured image on the screen. Thus, each mirror of the three DMD chips corresponds to one "pixel" of the image, and the "colour" of the pixel depends on the combination of the "on"/"off" ratio of the respective mirror of each chip. This approach is used in the so-called 3-chip DLP^{™} projection systems.

EP-A-0798586 discloses a system for image projection including a light beam generator, an array of micro-lenses for generating a plurality of partial beams, an array of coloured micro-filters or image micro-cells having size and cross-section adapted to the size and cross-section of the micro-lenses, and an activating device arranged to apply relative movement between the two arrays. Thereby, a luminous pattern can be projected, selected between various possible patterns. This system seems to be designed for projecting a limited number of predefined images.

US-A-5055832 discloses a disk element used for image projection, and including an aperture for letting through light from an optic fibre. Basically, according to the position of the disk, the "pixel" seems to be "on" or "off".

US-A-200110024310 discloses a system for image projection in which light is transmitted along a path including a colour filter layer. A micro-electromechanical device comprising a rotary shifter is used for, selectively, blocking the light and letting the light through. Basically, according to the position of the rotary shifter, the "pixel" is "on" or "off".

US-A-6201633 discloses a micro-electromechanical based system for image projection, involving the use of a shutter comprising petal-like torsionally-hinged shutter segments that can be moved from a horizontal (closed) to a vertical (open) position by means of using electrostatic attraction forces. Each "pixel" can be considered to correspond to several of said petal-like shutter segments, whereby the pixel can be selectively set into an "on" state, an "off" state and some "intermediate" states, according to the number of shutter segments that are in the closed and in the open position, respectively. However, each pixel involves a plurality of movable elements, and seems to present a rather complex structure.

US-2002/015831-A1 discloses a gyricon or twisting-particle display based on nonspheroidal (e.g., substantially cylindrical) optically anisotropic particles disposed in a substrate. The particles can be either bichromal or polychromal cylinders, preferably aligned parallel to one another and packed close together in a monolayer. A rotatable disposition of each particle is achievable while the particle is thus disposed in the substrate.

US-2002/196515-A1 relates to a system for modulating thermal infrared radiation for a pyroelectric imaging sensor or similar sensor by providing two discs rotating at the same speed, both discs provided adjacent to one another and between a source of radiation and a radiation sensor. Each of the discs is provided with a solid portion and an open portion. Changing the orientation of the solid portions of each the discs with respect to one another would change the sensitivity of the modulation device.

US-A-4974936 describes a device for supplying light to endoscopes; the light is passed from a light source by way of a revolving filter plate with areas of primary colours, and a runner wheel, to a photoconductor of the endoscope. The runner wheel rotates faster than the filter plate so that the beam of light on passing each transition from one coloured area of the filter plate to another is covered by an opaque region of the runner wheel.

It is an objective of the invention to provide an alternative system and method in which, by means of setting a simple mechanical shutter element into one of a plurality of predetermined positions, different levels of luminance and/or different colours can be obtained.

### DESCRIPTION OF THE INVENTION

A first aspect of the invention relates to an apparatus for image projection, comprising:
a plurality of devices for generating, by each device, a pixel of an image, arranged so that each device corresponds to a pixel of an image to be projected device for generating a pixel of an image, each of said devices comprising:
   an inlet end arranged for receiving light from a light source;
   an outlet end arranged for receiving light from said inlet end and for letting out light received from said inlet end; and
   at least one displaceable element arranged so that the position of the displaceable element determines the proportion between the amount of light let out at the outlet end and the amount of light received at the inlet end, by means of selectively blocking a light path between said inlet end and said outlet end.

Said at least one displaceable element comprises a rotatable disk element arranged to be selectively rotatable between:
- a maximum luminance position, in which it blocks a minimum portion (for example, 0%) of the light path and thus prevents a minimum portion (for example, 0%) of light received at the inlet end from being let out at said outlet end;
- a minimum luminance position, in which it blocks a maximum portion (for example, 100%) of the light path and thus prevents a maximum portion (for example, 100%) of light received at the inlet end from being let out at said outlet end; and
- at least one intermediate luminance position, in which it blocks an intermediate portion (for example, 25% and/or 50% and/or 75%) of said light path, thus preventing a corresponding intermediate portion of light received at said inlet end from being let out at said outlet end, said intermediate portion being larger than said minimum portion and smaller than said maximum portion.

In accordance with the invention, each device further comprises N colour filters, N≥2, each one of said colour filters being arranged to let through light of a pre-determined colour, said colour being different for each one of said colour filters; and,
at least one of said rotatable disk element is arranged in correspondence with each one of said colour filters, whereby the positions of said rotatable disk elements determine, at least in part, the amount of light arriving at said outlet end from said colour filters, thereby determining, at least in part, the contribution of the light let through the corresponding colour filter, to the total luminance and colour of the corresponding pixel.

The apparatus further comprises
at least one light source for providing light to the inlet ends of said devices; and
electronic control circuitry for providing control signals to each one of said devices, for selectively setting the rotatable disk elements of the devices into one of said maximum, minimum and intermediate luminance positions, for obtaining a desired luminance and/or colour of the corresponding pixel

In this way, the position of said rotatable disk element determines, at least in part, the luminance (thus determining the grey scales of the pixel) and/or the colour (especially when using several disk elements associated with colour filters) of the corresponding pixel. The invention thus provides for pixel projection in which the blocking element can provide not only for "on" and "off" levels, but also for "intermediate" levels, in accordance with the angular position of the disk element. Thus, the device makes it possible to, for example, provide for "grey scales" of the pixel without relying on the rapid shifting between an "on" state and an "off' state of the pixel, which is necessary when the grey scales are to be obtained relying on the integration that takes place in the visual system of a human observer.

Many small motors involving rotatable disks are known. Thus, the device of the invention makes it possible to use such, often simple, motors, for regulating the portion of the light from the inlet end that reaches the outlet end. Thus, the luminance and/or colour of the pixel can be determined by applying control signals to the motors of each pixel device. These motors can have very simple and non-expensive structures and, nevertheless, have a very high reliability and thus providing for rapid and exact control (for example, digital control) of luminance and/or colour of the filters. A large number of suitable motors are known by any person skilled in the art of, for example, micro-electromechanical systems (MEMS).

Preferably, the rotatable disk element is a micro-electromechanical disk element, for example, a micro-electromechanical disk element forming part of a micro-electromechanical motor arranged for rotating the disk element in accordance with control signals applied to said motor. For example, said micro-electromechanical motor can be arranged for rotating the disk element step by step, thereby providing for simple and reliable control of the angular position of the disk element. The motor can be an electrostatic micro-electromechanical motor. The disk element can be provided with projections or "teeth" arranged to interact with corresponding actuator elements of a stator part of the micro-electromechanical motor, to which control signals can be supplied.

The disk element can be a substantially circularly shaped disk element.

The disk element can be a substantially opaque disk element comprising at least one through hole (or a transparent or translucent area corresponding to a portion of its surface) for letting through light (preferably, in a direction substantially perpendicular to the surface of the disk element). Said through hole can extend over between 35% and 65% of the surface of the disk element (for example, over approximately 50% of said surface, for example, corresponding to a 180° sector of the circular disk element).

The disk element (or several disk elements) can be arranged on a substrate, said substrate comprising a through hole (or, if there are more than one disk element arranged on the same substrate, one through hole for each disk element), such as a semi-cylindrical tunnel, for letting through light. Said through hole in the substrate can arranged so that, in at least one angular position of the disk element, the through hole of the disk element is positioned, at least partly, in correspondence with (aligned with) the through hole of the substrate, whereby light can pass through both of said through holes following the light path between the inlet end and the outlet end. That is, the through hole in the substrate and the through hole in the disk element can be aligned along the light path, whereby light from said inlet end can pass through said through holes and arrive at the outlet end. When the disk element is rotated away from said aligned position, the amount of light passing through both through holes is reduced, in accordance with the angular position of the disk element.

The disk element can be arranged to rotate in a plane substantially perpendicular to the light path between said inlet end and said outlet end.

The disk element or elements can be made of, for example, polysilicon, metal or any other material suitable for micro-electromechanical motors.

Said N colour filters can comprise one red, one blue and one green filter, for letting through red, blue and green light.

Each colour filter can be arranged between said inlet end and said outlet end.

A further aspect of the invention relates to an apparatus for image projection, comprising:
a plurality of devices as described above, arranged so that each device corresponds to a pixel of an image to be projected;
at least one light source for providing light to the inlet ends of said devices;
electronic control circuitry for providing control signals to each one of said devices, for selectively setting the rotatable disk elements of the devices into one of said maximum, minimum and intermediate luminance positions, for obtaining a desired luminance and/or colour of the corresponding pixel. The light source can be a white light source.

A further aspect of the invention relates to a method for generating a pixel of an image in an image projection system. The method comprises the steps of:
supplying light to an inlet end of a light path having said inlet end and an outlet end arranged for receiving light from said inlet end and for letting out light received from said inlet end; and
selectively blocking the light path, so as to determine the proportion between the amount of light let out at the outlet end and the amount of light received at the inlet end.

The step of selectively blocking the light path comprises selectively rotating a rotatable disk element between:
- a maximum luminance position, in which it blocks a minimum portion of the light path and thus prevents a minimum portion of the light supplied to said inlet end from being let out at said outlet end;
- a minimum luminance position, in which it blocks a maximum portion of the light path and thus prevents a maximum portion of the light supplied to said inlet end from being let out at said outlet end; and
- at least one intermediate luminance position, in which it blocks an intermediate portion of said light path, thus preventing a corresponding intermediate portion of the light supplied to said inlet end from being let out at said outlet end, said intermediate portion being larger than said minimum portion and smaller than said maximum portion.

In this manner, the position of said rotatable disk element determines, at least in part, the luminance and/or the colour of the pixel. In accordance with the invention, the method further comprises the steps of:
letting light pass through N colour filters, N≥2, each colour filter being arranged in a corresponding light path; and
combining the light from said light paths so as to obtain a composite colour of light at the output end;
wherein at least three rotatable disk elements are used, each disk element being arranged for selectively blocking light corresponding to one of said colour filters, so as to determine, at least in part, the contribution of the light let through the corresponding colour filter, to the total luminance and colour of the pixel.

By means of the method, the angular position of the rotatable disk element is used to select the luminance of the pixel (and/or, in multi-colour-filter systems, the colour of the pixel).

Preferably, the method further comprises the step of using, for selectively blocking the light path, a micro-electromechanical motor having a rotor part constituting said rotatable disk element, whereby the rotation of said disk element is performed by applying control signals to a stator part of said motor. This makes it possible to produce cheap and reliable devices for controlling the luminance (and/or colour) of the pixel; each disk element can adopt a plurality of angular positions, corresponding, for example, to one "on" or "maximum luminance" position, one "off" or "minimum luminance" position and one or several "intermediate luminance position", under control of the control signals applied to the stator part.

The disk element can be rotated in a plane substantially perpendicular to the direction of the light path from said inlet end to said outlet end; preferably, said disk element is provided with at least one through hole (or with a transparent or translucent portion) for letting through light.

A further aspect of the invention relates to a method for displaying or projecting an image, by means of projecting (for example, on a screen) a plurality of pixels of said image using, for each pixel, a method as outlined above; the rotatable disk elements are selectively rotated by applying, using electronic control circuitry, displacement control signals generated based on an input signal, such as an input graphic or video signal, corresponding to the image or images to be projected or displayed.

### BRIEF DESCRIPTION OF THE DRAWINGS

Figure 1 schematically illustrates a preferred embodiment of the invention, suitable for projection of a pixel of a colour image.
Figures 2A-2C schematically illustrates the selective blocking of the light path by rotating the disk element, in accordance with a preferred embodiment of the invention.
Figure 3 is a top view of a disk element in accordance with a preferred embodiment of the invention.
Figure 4 is a side view of the disk element in accordance with said preferred embodiment of the invention.
Figure 5 is a perspective view of the disk element in accordance with said preferred embodiment of the invention.
Figure 6 is a top view of the disk element in accordance with said preferred embodiment of the invention, mounted on a substrate.
Figure 7 is a top view of the substrate as per figure 6, with the disk element removed.
Figure 8 is a transversal cross sectional side view of the disk element mounted on the substrate, in a maximum luminance position.
Figure 9 is the side view as per figure 8, but after rotation by 180° of the disk element.
Figure 10 is a bottom view of the disk element, also illustrating positions of the actuators used for displacing the disk element.

### DESCRIPTION OF PREFERRED EMBODIMENTS OF THE INVENTION

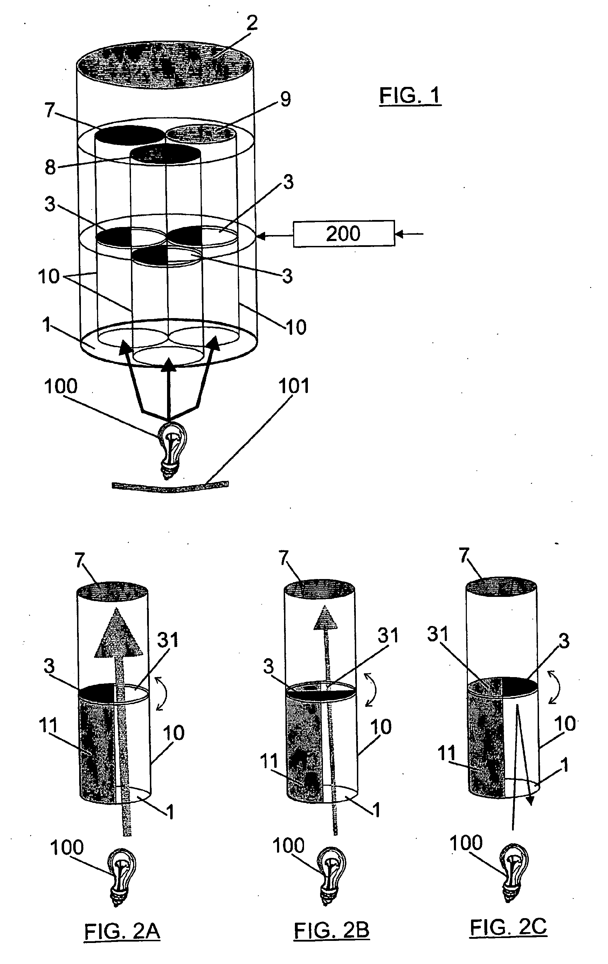

Figure 1 schematically illustrates a preferred embodiment of the invention, wherein the pixel device is arranged for receiving, at an inlet end 1, light coming from a light source 100 for white light, positioned above a mirror 101. The light is let in at said inlet end, from which it passes through perforations, tunnels or similar light path 10 defining means, each associated with a rotatable disk element 3, towards an outlet end 2. The rotation of the disk element is controlled by electronic control circuitry 200 (schematically illustrated), arranged to control the rotation of the disk elements in accordance with control signals derived from signals related to the image to be displayed (for example, graphic or video signals).

The device further comprises, at a position along each one of the light paths, a colour filter 7, 8, 9; one of said colour filters is a red colour filter 7, another is a blue colour filter 8, and the third one is a green colour filter 9. Thus, at the outlet end 2, red, green and blue light is received from the respective light paths; at the outlet end, said light is combined (for example, using a suitable lens arrangement, not shown) to provide for a composite colour of the pixel, by spectrum recombination. The colour of the pixel depends on the contribution of the light passing through the red, green and blue filters, respectively, to the total light output at the outlet end 2.

Thus, in accordance with the invention, the proportion of the light let in at the inlet end 1 that arrives at the outlet end can be regulated by selectively "blocking" the respective light paths. Thus, for example, if the light path corresponding to the green colour filter 9 is completely blocked whereas the light paths corresponding to the red and the blue filters are completely open, a violet composite colour is obtained at the outlet end. Substantially the same colour is obtained, but with a lower luminance, if the light paths corresponding to the green colour filter is kept completely blocked, whereas the light paths corresponding to the red and blue filters are each blocked to 50%, etc.

Figures 2A-2C schematically illustrate how the light paths can be blocked by rotating the disk element, according to a preferred embodiment of the invention and in relation to the light path 10 corresponding to the red colour filter 7. Basically, the light path 10 is defined by a tunnel having, below the disk element 3, a fixed opaque portion 11 that blocks the light, leaving a semi-cylindrical passage open for letting through light; thus, light from the light source 100 can only flow through the semi-cylindrical part of the light path not blocked by said fixed opaque portion 11. Now, each disk element has a through hole 31, in this case, corresponding to about 50% of the surface of the disk element, namely, to a 180° sector of said disk element.

In figure 2A, the through hole 31 is aligned with the non-blocked part of the light path 10; this position corresponds to the maximum luminance position, that is, to the position providing for maximum luminance at the outlet end.

In figure 2B, the disk element 3 has been rotated 90° in the plane perpendicular to the direction of light along the light path. Now, only 50% of the through hole 31 correspond to the non-blocked portion of the light path; this position corresponds to an intermediate luminance position (providing for a reduced luminance at the outlet end).

In figure 2C, the disk element 3 has been rotated 180° from the position of figure 2A and the through hole 31 is now positioned in alignment with the blocked portion of the light path; this position corresponds to the minimum luminance position; in this case, no light is let through to the outlet end.

That is, if the arrangement of figures 2A-2C corresponds to the red colour filter 7 part of the arrangement of figure 1,
- in the position of figure 2A, there is a maximum contribution of red colour light to the total colour and luminance of the pixel;
- in the position of figure 2B, there is an intermediate contribution of red colour light to the total colour and luminance of the pixel;
- in the position of figure 2C, there is a minimum contribution of red colour light to the total colour and luminance of the pixel (in this case, no contribution of all, as the light path 10 is completely blocked by the opaque portion 11 of the light path in combination with the opaque portion of the disk, that is, the portion of the disk not corresponding to the through hole 31).

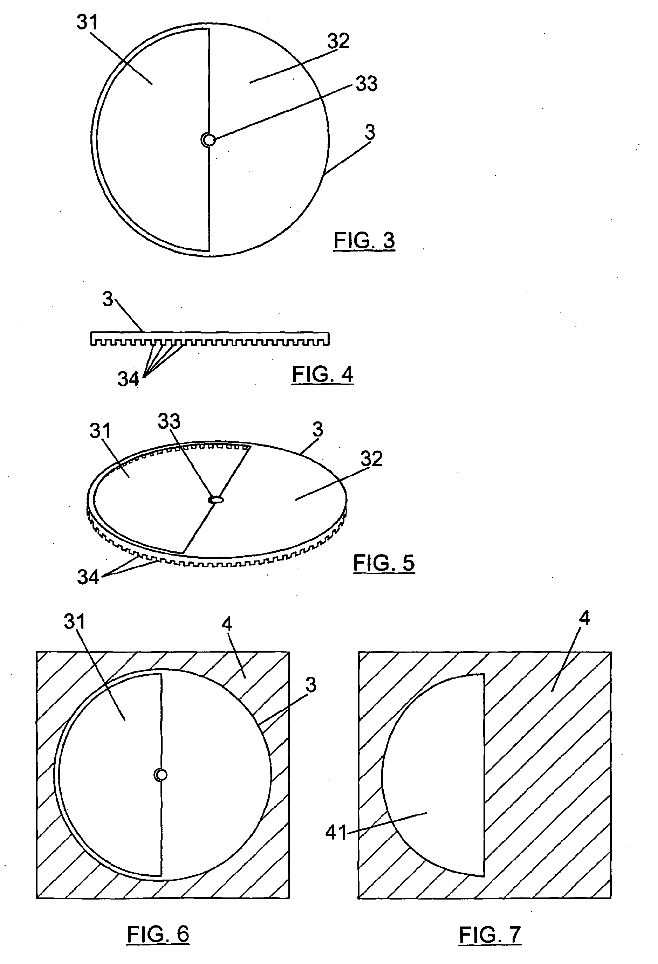

A rotatable disk element 3 in accordance with a preferred embodiment of the invention is shown in figure 3. The disk element comprises a substantially flat, circular disk element 3 having an opaque portion 32 and a through hole 31 for letting through light when aligned with a non-blocked portion of a light path. The disk element is arranged to be selectively rotated around a shaft 33, under the control of control signals applied to actuators or stator parts (not shown in figure 3) of an electrostatic micro-electromechanical motor; the disk element 3 constitutes the rotor part of said motor.

Figure 4 shows a side view of the disk element, illustrating the rotor "teeth" or projections 34 with which the actuator or stator part of the motor interacts, for causing the disk to rotate, in accordance with the conventional techniques well known in the art.

Figure 5 is a perspective view of the disk element 3, showing the opaque (blocking) portion 32, the through hole 31, the teeth or projections 34 and the shaft 33 around which the disk element can pivote or rotate.

Figure 6 is a top view of the disk element 3 (with its through hole 31) mounted on a substrate 4. The disk element 3 can be manufactured of polysilicon (a commonly used material for manufacture of micro-electromechanical systems or MEMS) and the substrate 4 can be made of, for example, silicon. Figure 7 shows the substrate without the disk, and it can be observed how the substrate is provided with a cavity or through hole 41 having a size and shape approximately corresponding to the size and shape of the through hole 31 of the disk elements (although it is by no means necessary that said sizes and shapes be the same or similar). Now, when the disk element 3 is mounted on the substrate 4, depending on the angular position of the disk element, its through hole 31 can be more or less aligned with the cavity or through hole 41 of the substrate; the degree of alignment determines the degree of blocking of the light path.

The substrate can constitute or make up a part of the means for defining a light path such as the light path 10 of figures 1 and 2A-2C. In that case, the substrate can also constitute the "opaque" portion 11 illustrated in figures 2A-2C.

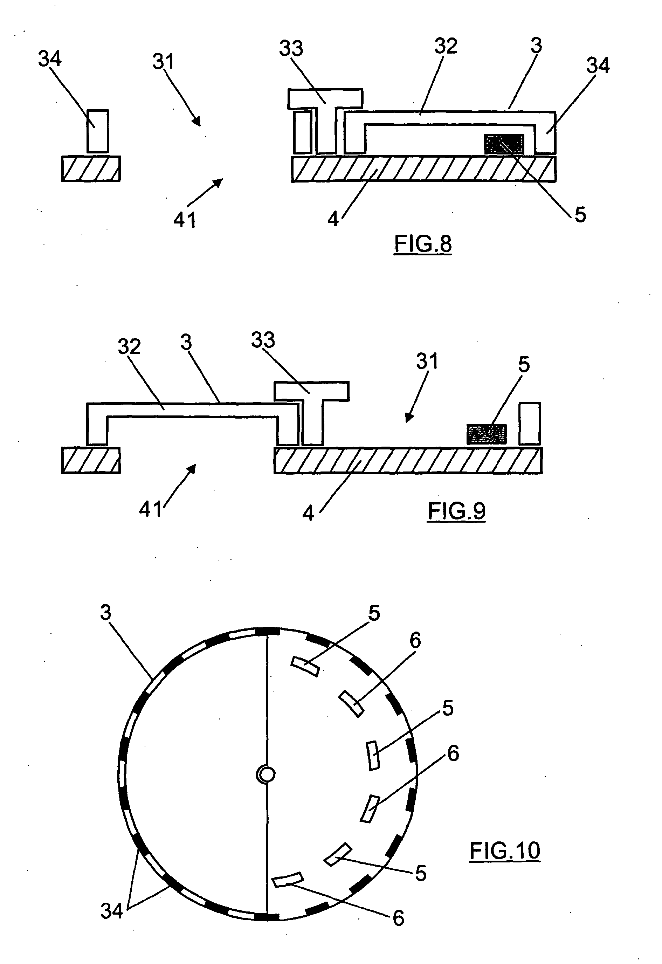

Figures 8 and 9 show two side views (in transversal cross section) of the disk element 3 mounted on the substrate 4.

In figure 8, the disk element is in the "maximum luminance" position: the through hole 31 of the disk element is aligned with the cavity or through hole 41 of the substrate 4, and light can flow along the light path from the inlet end to the outlet end, without being blocked by the disk element 3.

Figure 9 shows the same arrangement but after rotating the disk element 180° around the shaft 33. Here, the through hole 31 of the disk element is no longer aligned with the cavity or through hole 41 of the substrate 4; instead, the opaque portion 32 of the disk element 3 covers the through hole of the substrate 4 and, thus, blocks the light path defined by the through hole 41 in the substrate 4. This position corresponds to a minimum luminance position.

In figures 8 and 9, an actuator element 5 is also schematically shown; by applying control signals to the actuator element, electrostatic forces will act between the actuator element 5 and the adjacent "tooth" or projection 34 of the disk element; by applying suitable control signals to the actuator elements, the disk element can be forced to rotate around the shaft 33, in a well-known manner.

Figure 10 is a bottom view of the disk element 3, schematically showing its teeth or projections 34 and two groups 5 and 6 of actuator or stator elements, which are embodied on the substrate (not shown in figure 10) and to which the control signals are applied in a well-known manner, for producing the desired rotation of the disk element to the desired position, thereby determining the proportion of the light from the inlet end that will be allowed to reach the outlet end.

Throughout the description and claims of the specification, the word "comprise" and variations of the word, such as "comprising", are not intended to exclude other additives, components, integers or steps.

## Claims

1. An apparatus for image projection, comprising:
a plurality of devices for generating, by each device, a pixel of an image, arranged so that each device corresponds to a pixel of an image to be projected, each of said devices comprising:
an inlet end (1) arranged for receiving light from a light source;
an outlet end (2) arranged for receiving light from said inlet end and for letting out light received from said inlet end;
at least one displaceable element arranged so that the position of the displaceable element determines the proportion between the amount of light let out at the outlet end (2) and the amount of light received at the inlet end (1), by means of selectively blocking a light path (10) between said inlet end (1) and said outlet end (2);
wherein said at least one displaceable element comprises a rotatable disk element (3) arranged to be selectively rotatable between:
- a maximum luminance position, in which it blocks a minimum portion of the light path (10) and thus prevents a minimum portion of light received at the inlet end (1) from being let out at said outlet end (2);
- a minimum luminance position, in which it blocks a maximum portion of the light path (10) and thus prevents a maximum portion of light received at the inlet end (1) from being let out at said outlet end (2); and
- at least one intermediate luminance position, in which it blocks an intermediate portion of said light path (10), thus preventing a corresponding intermediate portion of light received at said inlet end (1) from being let out at said outlet end (2), said intermediate portion being larger than said minimum portion and smaller than said maximum portion;
whereby the position of said rotatable disk element (3) determines, at least in part, the luminance and/or the colour of the corresponding pixel;
wherein each device further comprises N colour filters (7, 8, 9), N≥2, each one of said colour filters being arranged to let through light of a pre-determined colour, said colour being different for each one of said colour filters; and
at least one of said rotatable disk elements (3) is arranged in correspondence with each one of said colour filters (7, 8, 9), whereby the positions of said rotatable disk elements (3) determine, at least in part, the amount of light arriving at said outlet end from said colour filters, thereby determining, at least in part, the contribution of the light let through the corresponding colour filter, to the total luminance and colour of the pixel;
the apparatus further comprising:
at least one light source (100) for providing light to the inlet ends (1) of said devices;
electronic control circuitry (200) for providing control signals to each one of said devices, for selectively setting the rotatable disk elements of the devices into one of said maximum, minimum and intermediate luminance positions, for obtaining a desired luminance and/or colour of the corresponding pixel.

2. An apparatus according to claim 1, wherein the rotatable disk element (3) is a micro-electromechanical disk element.

3. An apparatus according to claim 2, wherein said rotatable disk element (3) forms part of a micro-electromechanical motor arranged for rotating the disk element (3) in accordance with control signals applied to said motor.

4. An apparatus according to claim 3, wherein said micro-electromechanical motor is arranged for rotating the disk element (3) step by step.

5. An apparatus according to any of claims 3 and 4, wherein the motor is an electrostatic micro-electromechanical motor.

6. An apparatus according to any of claims 3-5, wherein the disk element (3) is provided with projections (34) arranged to interact with corresponding actuator elements (5, 6) of a stator part of the micro-electromechanical motor.

7. An apparatus according to any of the preceding claims, wherein the disk element is a substantially circularly shaped disk element.

8. An apparatus according to any of the preceding claims, wherein the disk element is a substantially opaque disk element comprising at least one through hole (31) for letting through light.

9. An apparatus according to claim 8, wherein said through hole (31) extends over between 35% and 65% of the surface of the disk element.

10. An apparatus according to any of the preceding claims, wherein the, at least one, disk element is arranged over a substrate (4), said substrate (4) comprising a through hole (41) for letting through light.

11. An apparatus according to claim 10 when depending on any of claims 8 and 9, wherein said through hole (41) in the substrate is arranged so that, in at least one angular position of the disk element (3), the through hole (31) of the disk element is positioned, at least partly, aligned with the through hole (41) of the substrate, whereby light can pass through both of said through holes following the light path (10) between the inlet end and the outlet end.

12. An apparatus according to any of the preceding claims, wherein the disk element is arranged to rotate in a plane substantially perpendicular to the direction of the light path between said inlet end (1) and said outlet end (2).

13. An apparatus according to any of the preceding claims, wherein the, at least one, disk element (3) is made of polysilicon.

14. An apparatus according to any of claims 1-12, wherein the, at least one, disk element (3) is made of metal.

15. An apparatus according to any of the preceding claims, wherein the device comprises a plurality of said displaceable elements, each comprising one of said rotatable disk elements (3).

16. An apparatus according to any of the preceding claims, wherein said N colour filters comprise one red colour filter (7), one blue colour filter (8) and one green colour filter (9), for letting through red, blue and green light, respectively.

17. An apparatus according to any of the preceding claims, wherein each colour filter is arranged between said inlet end (1) and said outlet end (2).

18. An apparatus according to any preceding claim, wherein the light source (100) is a white light source.

19. A method for image projection comprising the steps of generating a plurality of pixels of an image in an image projection system, each pixel being generated by
supplying light to an inlet end (1) of a light path (10) having said inlet end (1) and an outlet end (2) arranged for receiving light from said inlet end and for letting out light received from said inlet end;
selectively blocking the light path, so as to determine the proportion between the amount of light let out at the outlet end (2) and the amount of light received at the inlet end (1);
wherein the step of selectively blocking the light path comprises selectively rotating a rotatable disk element (3) between:
- a maximum luminance position, in which it blocks a minimum portion of the light path (10) and thus prevents a minimum portion of the light supplied to said inlet end (1) from being let out at said outlet end (2);
- a minimum luminance position, in which it blocks a maximum portion of the light path (10) and thus prevents a maximum portion of the light supplied to the inlet end (1) from being let out at said outlet end (2); and
- at least one intermediate luminance position, in which it blocks an intermediate portion of said light path (10), thus preventing a corresponding intermediate portion of the light supplied to said inlet end (1) from being let out at said outlet end (2), said intermediate portion being larger than said minimum portion and smaller than said maximum portion;
whereby the position of said rotatable disk element (3) determines, at least in part, the luminance and/or the colour of the pixel;
wherein the method further comprises the steps of:
letting light pass through N colour filters (7, 8, 9), N≥2, each colour filter being arranged in a corresponding light path (10); and
combining the light from said light paths so as to obtain a composite colour of light at the output end;
wherein at least three rotatable disk elements are used, each disk element being arranged for selectively blocking light corresponding to one of said colour filters, so as to determine, at least in part, the contribution of the light let through the corresponding colour filter, to the total luminance and colour of each pixel.

20. A method according to claim 19, further comprising the step of using, for selectively blocking the light path, a micro-electromechanical motor having a rotor part constituting said rotatable disk element (3), whereby the rotation of said disk element is performed by applying control signals to a stator part of said motor.

21. A method according to any of claims 19 and 20, wherein the disk element (3) is rotated in a plane substantially perpendicular to the direction of the light path (10) from said inlet end to said outlet end, said disk element being provided with at least one through hole (31) for letting through light.

22. A method for projecting an image, by means of projecting a plurality of pixels of said image using, for each pixel, a method according to any of claims 19-21, the rotatable disk elements being selectively rotated by applying, using electronic control circuitry, displacement control signals generated based on an input signal corresponding to the image to be projected.

## Patentansprüche

1. Vorrichtung für die Bildprojektion, umfassend:
mehrere Vorrichtungen zur Erstellung, pro Vorrichtung, eines Pixels eines Bildes, auf eine Weise angeordnet, dass jede Vorrichtung dem Pixel eines Bildes entspricht, das projiziert wird, jede der Vorrichtungen umfassend:
ein Eingangsstück (1), das auf eine Weise angeordnet ist, um Licht von einer Lichtquelle aufzunehmen;
ein Ausgangsstück (2), das auf eine Weise angeordnet ist, um Licht von dem Eingangsstück aufzunehmen und um Licht durchzulassen, das von dem Eingangsstück aufgenommen worden ist;
mindestens ein verstellbares Element, das auf eine Weise angeordnet ist, so dass die Position des verstellbaren Elements das Verhältnis zwischen dem Umfang an Licht, das am Ausgangsstück (2) durchgelassen wird, und dem Umfang an Licht, das am Eingangsstück (1) aufgenommen wird, festlegt, indem ein Lichtpfad (10) zwischen dem Eingangsstück (1) und dem Ausgangsstück (2) wahlweise blockiert wird; wobei mindestens ein verstellbares Element ein drehbares Scheibenelement (3) umfasst, auf eine Weise angeordnet, dass es wahlweise gedreht werden kann zwischen
- einer maximalen Leuchtdichteposition, in der es einen minimalen Anteil des Lichtpfads (10) blockiert und somit verhindert, dass ein minimaler Anteil des Lichts, das an dem Eingangsstück (1) aufgenommen wird, an dem Ausgangstück (2) durchgelassen wird;
- einer minimalen Leuchtdichteposition, in der es einen maximalen Anteil des Lichtpfads (10) blockiert und somit verhindert, dass ein maximaler Anteil des Lichts, das an dem Eingangsstück (1) aufgenommen wird, an dem Ausgangstück (2) durchgelassen wird; und
- mindestens einer mittleren Leuchtdichteposition, in der es einen mittleren Anteil des Lichtpfads (10) blockiert, so dass verhindert wird, dass ein entsprechender mittlerer Anteil des Lichts, das am Eingangsstück (1) aufgenommen wird, am Ausgangsstück (2) durchgelassen wird, wobei der mittlere Anteil größer als der minimale Anteil und kleiner als der maximale Anteil ist;
wobei die Position des drehbaren Scheibenelements (3) die Leuchtdichte und/oder die Farbe des entsprechenden Pixels, zumindest teilweise, festlegt;
wobei jedes Gerät zudem N Farbfilter (7, 8, 9), N≥2, umfasst, und jeder der Farbfilter auf eine Weise angeordnet ist, um Licht einer vorbestimmten Farbe durchzulassen, wobei die Farbe jedes Farbfilters unterschiedlich ist; und
wobei mindestens eines der drehbaren Scheibenelemente (3) im Verhältnis zu jedem der Farbfilter (7, 8, 9) angeordnet ist, und die Positionen der drehbaren Scheibenelemente (3), zumindest teilweise, den Umfang an Licht festlegen, das über die Farbfilter an das Ausgangsende geleitet wird, wodurch, zumindest teilweise, der Anteil des Lichts festgelegt wird, das über den entsprechenden Farbfilter durchgelassen wird, im Verhältnis zu der gesamten Leuchtdichte und Farbe des Pixels;
Vorrichtung, weiterhin umfassend:
mindestens eine Lichtquelle (100) zum Bereitstellen von Licht für die Eingangsstücke (1) der Geräte;
elektronische Steuerungsschaltung (200) zum Bereitstellen von Steuersignalen für jedes der Geräte, zum wahlweisen Einstellen der drehbaren Scheibenelemente der Geräte auf die maximale, minimale und mittlere Leuchtdichteposition, um die gewünschte Leuchtdichte und/oder Farbe des entsprechenden Pixels zu erhalten.

2. Vorrichtung nach Anspruch 1, wobei das drehbare Scheibenelement (3) ein mikroelektromechanisches Scheibenelement ist.

3. Vorrichtung nach Anspruch 2, wobei das drehbare Scheibenelement (3) Teil eines mikroelektromechanischen Motors ist, der auf eine Weise angeordnet ist, um das Scheibenelement (3) in Übereinstimmung mit den Steuersignalen für den Motor zu drehen.

4. Vorrichtung nach Anspruch 3, wobei der mikroelektromechanische Motor auf eine Weise angeordnet ist, um das Scheibenelement (3) Schritt für Schritt zu drehen.

5. Vorrichtung nach einem der Ansprüche 3 und 4, wobei der Motor ein elektrostatischer mikroelektromechanischer Motor ist.

6. Vorrichtung nach einem der Ansprüche 3-5, wobei das Scheibenelement (3) vorspringende Teile (34) aufweist, die auf eine Weise angeordnet sind, um mit den entsprechenden Auslösern (5, 8) des Stators des mikroelektromechanischen Motors zusammenzuwirken.

7. Vorrichtung nach einem der vorhergehenden Ansprüche, wobei das Scheibenelement ein vornehmlich kreisförmig geformtes Scheibenelement ist.

8. Vorrichtung nach einem der vorhergehenden Ansprüche, wobei das Scheibenelement ein vornehmlich undurchsichtiges Scheibenelement ist, umfassend mindestens eine Durchflussöffnung (31), um Licht durchzulassen.

9. Vorrichtung nach Anspruch 8, wobei sich die Durchflussöffnung (31) über 35% und 85% der Oberfläche des Scheibenelements erstreckt.

10. Vorrichtung nach einem der vorhergehenden Ansprüche, wobei mindestens eines der Scheibenelemente über einen Träger (4) angeordnet ist, und der Träger (4) umfassend eine Durchflussöffnung (41), um Licht durchzulassen.

11. Vorrichtung nach Anspruch 10, wenn, in Abhängigkeit von Anspruch 8 und 9, die Durchflussöffnung (41) auf dem Träger auf eine Weise angeordnet ist, so dass, in mindestens einer eckigen Position des Scheibenelements (3), die Durchflussöffnung (31) des Scheibenelements, zumindest teilweise, auf eine Weise positioniert ist, und mit der Durchflussöffnung (41) des Trägers abgestimmt ist, so dass Licht durch beide Durchflussöffnungen fließen kann, um dem Lichtpfad (10) zwischen dem Eingangsstück und Ausgangsstück zu folgen.

12. Vorrichtung nach einem der vorhergehenden Ansprüche, wobei das Scheibenelement auf eine Weise angeordnet ist, um sich auf einer Ebene zu drehen, die vornehmlich senkrecht in Richtung des Lichtpfads zwischen dem Eingangsstück (1) und dem Ausgangsstück (2) ist.

13. Vorrichtung nach einem der vorhergehenden Ansprüche, wobei mindestens ein Scheibenelement (3) aus Polysilicon besteht.

14. Vorrichtung nach einem der Ansprüche 1-12, wobei mindestens ein Scheibenelement (3) aus Metall besteht.

15. Vorrichtung nach einem der vorhergehenden Ansprüche, wobei das Gerät mehrere verstellbare Elemente umfasst, jedes umfassend eines der drehbaren Scheibenelemente (3).

16. Vorrichtung nach einem der vorhergehenden Ansprüche, wobei N Farbfilter einen roten Farbfilter (7), einen blauen Farbfilter (8) und einen grünen Farbfilter (9) umfassen, um jeweils rotes, blaues und grünes Licht durchzulassen.

17. Vorrichtung nach einem der vorhergehenden Ansprüche, wobei jeder Farbfilter zwischen dem Eingangsstück (1) und dem Ausgangsstück (2) angeordnet ist.

18. Vorrichtung nach einem der vorhergehenden Ansprüche, wobei die Lichtquelle (100) eine weiße Lichtquelle ist.

19. Verfahren für die Bildprojektion, umfassend Schritte zum Erstellen mehrerer Pixel eines Bildes in einem System zur Bildprojektion, wobei jeder Pixel erstellt wird, indem
Licht einem Eingangsstück (1) eines Lichtpfads (10) zugeführt wird, wobei das Eingangsstück (1) und das Ausgangsstück (2) auf eine Weise angeordnet sind, um Licht von dem Eingangsstück aufzunehmen und Licht, das von dem Eingangsstück aufgenommen worden ist, durchzulassen;
der Lichtpfad wahlweise blockiert wird, so dass das Verhältnis zwischen dem Umfang an Licht, das am Ausgangsstück (2) durchgelassen wird und dem Umfang an Licht, das am Eingangsstück (1) aufgenommen wird, festlegt wird;
der Schritt zum wahlweisen Blockieren des Lichtpfads das wahlweise Drehen eines drehbaren Scheibenelements (3) umfasst zwischen
- einer maximalen Leuchtdichteposition, in der es einen minimalen Anteil des Lichtpfads (10) blockiert und somit verhindert, dass ein minimaler Anteil des Lichts, der an dem Eingangsstück (1) aufgenommen wird, an dem Ausgangstück (2) durchgelassen wird;
- einer minimalen Leuchtdichteposition, in der es einen maximalen Anteil des Lichtpfads (10) blockiert und somit verhindert, dass ein maximaler Anteil des Lichts, das an dem Eingangsstück (1) aufgenommen wird, an dem Ausgangstück (2) durchgelassen wird; und
- mindestens einer mittleren Leuchtdichteposition, in der es einen mittleren Anteil des Lichtpfads (10) blockiert, so dass verhindert wird, dass ein entsprechender mittlerer Anteil des Lichts, der am Eingangsstück (1) aufgenommen wird, am Ausgangsstück (2) ausgegeben wird, wobei der mittlere Anteil größer als der minimale Anteil und kleiner als der maximale Anteil ist;
wobei die Position des drehbaren Scheibenelements (3) die Leuchtdichte und/oder die Farbe des Pixels, zumindest teilweise, festlegt;
wobei das Verfahren weiterhin Schritte umfasst zum:
Durchlassen von Licht durch N Farbfilter (7, 8, 9), N ≥2, wobei jeder Farbfilter auf einem entsprechenden Lichtpfad (10) angeordnet ist; und
Zusammenfassen von Licht von den Lichtpfaden, so dass am Ausgangsstück ein Farbgemisch von Licht entsteht;
wobei mindestens drei drehbare Scheibenelemente genutzt werden, und jedes Scheibenelement auf eine Weise angeordnet ist, um wahlweise Licht, entsprechend eines der Farbfilter, zu blockieren, um, zumindest teilweise, den Anteil des Lichts festzulegen, das durch den entsprechenden Farbfilter durchgelassen wird, im Verhältnis zu der gesamten Leuchtdichte und der Farbe jedes Pixels.

20. Verfahren nach Anspruch 19, weiterhin umfassend den Schritt zum Benutzen, für das wahlweise Blockieren des Lichtpfads, eines mikroelektromechanischen Motors, der einen Rotorteil aufweist, der das drehbare Scheibenelement (3) bildet, wobei die Drehung des Scheibenelements ausgeführt wird, indem Kontrollsignale an einen Stator des Motors gesendet werden.

21. Verfahren nach einem der Ansprüche 19 und 20, wobei sich das Scheibenelement (3) auf einer Ebene dreht, die vornehmlich senkrecht in Richtung des Lichtpfads (10) von dem Eingangsstück bis zu dem Ausgangsstück ist, und wobei das Scheibenelement mindestens eine Durchlassöffnung (31) aufweist, um Licht durchzulassen.

22. Verfahren zum Projizieren eines Bildes, durch Projizieren mehrerer Pixel des Bildes, unter Benutzung eines Verfahrens nach einem der Ansprüche 19-21 für jeden Pixel, wobei die drehbaren Scheibenelemente wahlweise gedreht werden, indem elektronische Steuerungsschaltungen genutzt werden, und verstellbare Kontrollsignale erstellt werden, auf Grundlage des Eingangssignals, entsprechend dem Bild, das projiziert wird.

## Revendications

1. Appareil pour la projection d'images, comprenant :
une pluralité de dispositifs pour générer, par chaque dispositif, un pixel d'une image, arrangé de telle sorte que chaque dispositif correspond à un pixel d'une image devant être projetée, chacun desdits dispositifs comprenant :
une extrémité du côté d'entrée (1) arrangée pour recevoir de la lumière en provenance d'une source de lumière ;
une extrémité du côté d'entrée (2) arrangée pour recevoir de la lumière en provenance de ladite extrémité du côté d'entrée et pour laisser sortir la lumière reçue en provenance de ladite extrémité du côté d'entrée ;
au moins un élément déplaçable arrangé de telle sorte que la position de l'élément déplaçable détermine la proportion entre la quantité de lumière qui est autorisée à sortir au niveau de l'extrémité du côté de sortie (2) et la quantité de lumière qui est reçue au niveau de l'extrémité du côté d'entrée (1), au moyen d'un blocage sélectif d'un chemin de lumière (10) entre ladite extrémité du côté d'entrée (1) et ladite extrémité du côté de sortie (2) ;
dans lequel ledit au moins un élément déplaçable comprend un élément de disque rotatif (3) arrangé de façon à être sélectivement rotatif entre :
- une position de luminance maximum, dans laquelle il bloque une portion minimum du chemin de lumière (10) et empêche ainsi qu'une portion minimum de lumière reçue au niveau de l'extrémité du côté d'entrée (1) ne soit autorisée à sortir au niveau de ladite extrémité du côté de sortie (2) ;
- une position de luminance minimum, dans laquelle il bloque une portion maximum du chemin de lumière (10) et empêche ainsi qu'une portion maximum de lumière reçue au niveau de l'extrémité du côté d'entrée (1) ne soit autorisée à sortir au niveau de ladite extrémité du côté de sortie (2) ; et
au moins une position de luminance intermédiaire, dans laquelle il bloque une portion intermédiaire dudit chemin de lumière (10), et empêche ainsi qu'une portion intermédiaire correspondante de lumière reçue au niveau de ladite extrémité du côté d'entrée (1) ne soit autorisée à sortir au niveau de ladite extrémité du côté de sortie (2), ladite portion intermédiaire étant plus grande que ladite portion minimum et plus petite que ladite portion maximum ;
moyennant quoi la position dudit élément de disque rotatif (3) détermine, au moins en partie, la luminance et / ou la couleur du pixel correspondant ;
dans lequel chaque dispositif comprend en outre N filtres de couleur (7, 8, 9) - N ≥ 2 - chacun desdits filtres de couleur étant arrangé de façon à laisser passer une lumière d'une couleur prédéterminée, ladite couleur étant différente pour chacun desdits filtres de couleur ; et
au moins un desdits éléments de disque rotatif (3) est arrangé en correspondance avec chacun desdits filtres de couleur (7, 8, 9), moyennant quoi les positions desdits éléments de disque rotatif (3) déterminent, au moins en partie, la quantité de lumière qui parvient au niveau de ladite extrémité du côté de sortie en provenance desdits filtres de couleur, de façon à déterminer ainsi, au moins en partie, la contribution de la lumière qui est autorisée à passer à travers le filtre de couleur correspondant par rapport à la luminance totale et à la couleur totale du pixel ;
l'appareil comprenant en outre :
au moins une source de lumière (100) pour fournir de la lumière aux extrémités du côté d'entrée (1) desdits dispositifs ;
un montage de circuits de commande électronique (200) pour fournir des signaux de commande à chacun desdits dispositifs, de façon à définir sélectivement les éléments de disque rotatif des dispositifs dans l'une desdites positions de luminance maximum, minimum et intermédiaire, de façon à obtenir une luminance souhaitée et / ou une couleur souhaitée du pixel correspondant.

2. Appareil selon la revendication 1, dans lequel l'élément de disque rotatif (3) est un élément de micro disque électromécanique.

3. Appareil selon la revendication 2, dans lequel ledit élément de disque rotatif (3) fait partie d'un micromoteur électromécanique arrangé pour faire tourner l'élément de disque (3) en accord avec des signaux de commande appliqués sur ledit moteur.

4. Appareil selon la revendication 3, dans lequel ledit micromoteur électromécanique est arrangé pour faire tourner l'élément de disque (3) étape par étape.

5. Appareil selon l'une quelconque des revendications 3 et 4, dans lequel le moteur est un micromoteur électromécanique électrostatique.

6. Appareil selon l'une quelconque des revendications 3 à 5, dans lequel l'élément de disque (3) est pourvu de parties saillantes (34) qui sont arrangées pour agir avec des éléments actionneurs correspondants (5, 6) d'une partie de stator du micromoteur électromécanique.

7. Appareil selon l'une quelconque des revendications précédentes, dans lequel l'élément de disque est un élément de disque de forme sensiblement circulaire.

8. Appareil selon l'une quelconque des revendications précédentes, dans lequel l'élément de disque est élément de disque sensiblement opaque comprenant au moins un trou de passage (31) pour laisser passer de la lumière.

9. Appareil selon la revendication 8, dans lequel ledit trou de passage (31) s'étend sur entre 35 % et 65 % de la surface de l'élément de disque.

10. Appareil selon l'une quelconque des revendications précédentes, dans lequel le au moins un élément de disque est arrangé sur un substrat (4), ledit substrat (4) comprenant un trou de passage (41) pour laisser passer la lumière.

11. Appareil selon la revendication 10 - quand elle dépend de l'une quelconque des revendications 8 et 9 - dans lequel ledit trou de passage (41) dans le substrat est arrangé de telle sorte que, dans au moins une position angulaire de l'élément de disque (3), le trou de passage (31) de l'élément de disque est positionné, au moins partiellement, aligné avec le trou de passage (41) du substrat, moyennant quoi de la lumière peut passer au travers des deux desdits trous de passage en suivant le chemin de lumière (10) entre l'extrémité du côté d'entrée et l'extrémité du côté de sortie.

12. Appareil selon l'une quelconque des revendications précédentes, dans lequel l'élément de disque est arrangé pour tourner dans un plan sensiblement perpendiculaire à la direction du chemin de lumière, entre ladite extrémité du côté d'entrée (1) et ladite extrémité du côté de sortie (2).

13. Appareil selon l'une quelconque des revendications précédentes, dans lequel le au moins un élément de disque (3) est fait en polysilicium.

14. Appareil selon l'une quelconque des revendications 1 à 12, dans lequel le au moins un élément de disque (3) est fait en métal.

15. Appareil selon l'une quelconque des revendications précédentes, dans lequel l'appareil comprend une pluralité desdits éléments déplaçables, qui comprennent chacun un desdits éléments de disque rotatif (3).

16. Appareil selon l'une quelconque des revendications précédentes, dans lequel lesdits N filtres de couleur comprennent un filtre de couleur rouge (7), un filtre de couleur bleue (8) et un filtre de couleur verte (9), pour laisser passer de la lumière de couleur rouge, bleue et verte, respectivement.

17. Appareil selon l'une quelconque des revendications précédentes, dans lequel chaque filtre de couleur est arrangé entre ladite extrémité du côté d'entrée (1) et ladite extrémité du côté de sortie (2).

18. Appareil selon l'une quelconque des revendications précédentes, dans lequel la source de lumière (100) est une source de lumière blanche.

19. Procédé pour la projection d'images comprenant les étapes consistant à générer une pluralité de pixels d'une image dans un système de projection d'images, chaque pixel étant généré en :
fournissant de la lumière vers une extrémité du côté d'entrée (1) d'un chemin de lumière (10) comprenant ladite extrémité du côté d'entrée (1) et une extrémité du côté de sortie (2) arrangée pour recevoir de la lumière en provenance de ladite extrémité du côté d'entrée et pour laisser sortir la lumière reçue en provenance de ladite extrémité du côté d'entrée ;
bloquant sélectivement le chemin de lumière de façon à déterminer la proportion entre la quantité de lumière qui est autorisée à sortir au niveau de l'extrémité du côté de sortie (2) et la quantité de lumière qui est reçue au niveau de l'extrémité du côté d'entrée (1) ;
dans lequel l'étape consistant à bloquer sélectivement le chemin de lumière comprend l'étape consistant à faire tourner sélectivement un élément de disque rotatif (3) entre :
- une position de luminance maximum dans laquelle il bloque une portion minimum du chemin de lumière (10) et empêche ainsi qu'une portion minimum de lumière reçue au niveau de ladite extrémité du côté d'entrée (1) ne soit autorisée à sortir au niveau de ladite extrémité du côté de sortie (2) ;
- une position de luminance minimum, dans laquelle il bloque une portion maximum du chemin de lumière (10) et empêche ainsi qu'une portion maximum de lumière reçue au niveau de l'extrémité du côté d'entrée (1) ne soit autorisée à sortir au niveau de ladite extrémité du côté de sortie (2) ; et
- au moins une position de luminance intermédiaire, dans laquelle il bloque une portion intermédiaire dudit chemin de lumière (10), et empêche ainsi qu'une portion intermédiaire correspondante de lumière reçue au niveau de ladite extrémité du côté d'entrée (1) ne soit autorisée à sortir au niveau de ladite extrémité du côté de sortie (2), ladite portion intermédiaire étant plus grande que ladite portion minimum et plus petite que ladite portion maximum ;
moyennant quoi la position dudit élément de disque rotatif (3) détermine, au moins en partie, la luminance et / ou la couleur du pixel ;
dans lequel le procédé comprend en outre les étapes consistant à :
laisser passer de la lumière à travers N filtres de couleur (7, 8, 9) - N ≥ 2 - chaque filtre de couleur étant arrangé dans un chemin de lumière correspondant (10) ; et
combiner la lumière en provenance desdits chemins de lumière de façon à obtenir une couleur composite de lumière au niveau de l'extrémité du côté de sortie ;
dans lequel au moins trois éléments de disque rotatif sont utilisés, chaque élément de disque étant arrangé pour bloquer sélectivement une lumière correspondant à l'un desdits filtres de couleur, de façon à déterminer ainsi, au moins en partie, la contribution de la lumière qui est autorisée à passer à travers le filtre de couleur correspondant par rapport à la luminance totale et à la couleur totale du pixel.

20. Procédé selon la revendication 19, comprenant en outre l'étape consistant à utiliser, afin de bloquer sélectivement le chemin de lumière, un micromoteur électromécanique ayant une partie de rotor qui constitue ledit élément de disque rotatif (3), moyennant quoi la rotation dudit élément de disque est exécutée en appliquant des signaux de commande sur une partie de stator dudit moteur.

21. Procédé selon l'une quelconque des revendications 19 et 20, dans lequel l'élément de disque (3) est amené à tourner dans un plan sensiblement perpendiculaire à la direction du chemin de lumière (10) depuis ladite extrémité d'entrée vers ladite extrémité du côté de sortie, ledit élément de disque étant pourvu d'au moins un trou de passage (31) pour laisser passer de la lumière à travers lui.

22. Procédé pour projeter une image, au moyen de la projection d'une pluralité de pixels de ladite image, en utilisant, pour chaque pixel, un procédé selon l'une quelconque des revendications 19 à 21, l'élément de disques rotatifs étant amenés à tourner sélectivement en appliquant, au moyen d'un montage de circuits de commande électronique, des signaux de commande de déplacement générés sur la base d'un signal d'entrée correspondant à l'image devant être projetée.
